Europäisches Patentamt

European Patent Office

Office européen des brevets

(11) Numéro de publication: **0 032 890**
A1

# (12) DEMANDE DE BREVET EUROPEEN

(21) Numéro de dépôt: 81870004.9

(22) Date de dépôt: 16.01.81

(51) Int. Cl.³: **B 23 Q 3/157**, B 23 Q 3/10, B 23 B 29/02

(30) Priorité: 21.01.80 LU 82096

(43) Date de publication de la demande: 29.07.81 Bulletin 81/30

(84) Etats contractants désignés: AT BE CH DE FR GB IT LI NL SE

(71) Demandeur: MULLER & PESANT, SOCIÉTE ANONYME, 46, rue du Faubourg-St-Lazare, F-59605 Maubeuge Cedex (FR)

(72) Inventeur: Muguerza, Luis, 29, rue Edmond Picard, B-1180 Bruxelles (BE)

(74) Mandataire: Van Malderen, Michel et al, p.a. Freylinger & Associes 22 avenue J.S. Bach (bte 43), B-1080 Bruxelles (BE)

(54) **Perfectionnements aux machines-outils du type centre d'usinage.**

(57) Centre d'usinage comportant une table (2) supportant la ou les pièces à usiner qui restent fixes lors de l'usinage, un magasin d'outil (3) et un dispositif de permutation d'outil (4, 4') caractérisé par le fait qu'il est équipé d'au moins deux porte-outils rotatifs (11, 12, 13, 14) fonctionnant simultanément, disposés selon des axes variables en fonction de l'opération à exécuter, dans un même cycle d'usinage.

ACTORUM AG

0032890

1

## PERFECTIONNEMENTS AUX MACHINES-OUTILS DU TYPE CENTRE D'USINAGE

La présente invention se rapporte à des perfectionnements apportés aux machines outils du type dit:" centre d'usinage" en vue notamment d'en augmenter la productivité.

Parmi les différents types de machines outils opérant par enlèvement de copeaux, on peut opposer les machines dans lesquelles la pièce à usiner est entraînée par rapport à un outil fixe, aux machines qualifiées de centre d'usinage dans lesquelles l'outil est mobile et en particulier rotatif, par rapport à une pièce fixe, lors de l'usinage.

Les avantages, inconvénients et limitations de chaque type de machines sont bien connus. On rappelera uniquement que le premier type de machine outil est limité à la production de pièces de révolution mais permet de nombreuses variations dimentionnelles en utilisant un outil unique.

Les machines du type centre d'usinage permettent quant à elles l'usinage de pièces complexes, comportant habituellement des surfaces planes, en y pratiquant des alésages, des fraisages, etc. L'utilisation de commandes numériques et d'équipements à microprocesseur permet de modifier , si on le souhaite, sans difficulté pour chaque pièce successive le travail effectué. Chaque opération unitaire nécessite en principe un outil approprié et de telles machines sont équipées en conséquence d'un magasin d'outils et d'organes de transfert pour remplacer rapidement l'outil utilisé à la fin de chaque séquence d'utilisation.

De tels centres d'usinage sont équipés d'une seule broche généralement horizontale, déplaçable selon trois axes perpendiculaires et comportant habituellement des moyens de transfert automatiques de la pièce à travailler qui est normalement disposée sur une table rotative afin de pouvoir l'usiner sous différents plans.

L'inconvénient majeur de ce type d'équipement est le fait que l'outil unique ne permet de réaliser qu'une seule opération sur la pièce et que les opérations élémentaires doivent se dérouler nécessairement séquentiellement.

Pour certaines opérations, tel que le forage d'un trou pasaant dans une boîte de vitesses par exemple, une difficulté particulière résulte du porte-à-faux de l'outil monté sur la broche unique, rendant aléatoire la précision du travail effectué et limitant les efforts applicables à l'outil.

On connaît aussi des machines de transfert rectiligne dans lesquelles les pièces sont montées sur des plaques formant des maillons d'une chaîne sans fin et sont ainsi déplacés d'un poste de travail au suivant. A un ou plusieurs postes de travail, il est possible de prévoir l'usinage simultané de la pièce arrivée à ce poste à l'aide de plusieurs machines autonomes. De telles machines sont destinées à des opérations séquentiellement répétitives, notamment dans des chaînes de montage automobile. Elles constituent une solution particulière pour les cas spécifiques de ce secteur et représentent un investissement coûteux; elles occupent bien entendu des surfaces importantes et ne sont applicables qu'à des productions en grande série.

Par le brevet FR.A.2.090.376 (AUGSBOURG) on connaît une machine-outil comportant plusieurs outils travaillant simultanément qui comporte une tête interchangeable à plusieurs broches combinée avec une tête à broche unique. Cette combinaison particulière d'une tête interchangeable à plusieurs broches avec une tête à broche unique constitue une limitation du genre d'opération réalisable. De plus les deux têtes sont disposées à angle fixe ce qui réduit encore les possibilités de travail.

D'autres dispositifs à plusieurs têtes éventuellement équipées d'outils interchangeables, mais disposées à angle fixe sont connus par le brevet FR-A 2,374,120 (KEARNEY), FR.A. 2,394,364 ( VARRY), USA -3,238,615 (LEONE) et dans une moindre mesure par la demande publiée DE.A - 200998 (HOLLER) Ces dispositifs présentent également les inconvénients inhérents à une disposition fixe des têtes qui limite les possibilités opérationnelles.

L'invention vise à éviter les inconvénients cités du matériel existant et à augmenter la cadence de production d'un centre d'usinage sans intervention d'opérateur supplémentaire.

Selon l"invention, un centre d'usinage comportant une table supportant la ou les pièces à usiner restant fixes lors de l'usinage, un magasin d'outil et un dispositif de permutation d'outil est caractérisé par le fait qu'il est équipé d'au moins deux porte-outils rotatifs fonctionnant simultanément, disposés selon des axes variables en fonction de l'opération à exécuter dans un même cycle d'usinage.

Lesdits porte-outils peuvent recevoir des outils identiques ou différents ou, ainsi qu'on le verra plus loin, peuvent recevoir pour le premier un outil et pour le second une lunette de réception correspondante.

L'utilisation d'au moins deux porte-outils, tout en conservant les avantages inhérents à un centre d'usinage, à savoir la grande souplesse de fonctionnement, rend possible un accroissement de la productivité de l'installation.

En effet, le principe de fonctionnement des centres d'usinage à une seule broche de l'état de la technique supposait un déplacement de la pièce, généralement par rotation sur la table de support, à chaque séquence opératoire, accompagné ou non du positionnement modifié du porte-outil, tandis que selon le concept inventif décrit, la pièce est usinée simultanément sous plusieurs angles d'attaque, à l'aide d'un seul équipement de centre d'usinage et sous la surveillance d'un seul opérateur.

De plus, cette approche nouvelle de la conception et de l'utilisation d'un centre d'usinage ouvre des perspectives nouvelles d'utilisation d'applications.

Avantageusement, les outils sont conçus pour travailler en effectuant la même opération, et ceci symétriquement par rapport à un axe de référence,qui ne passe pas par la pièce à usiner.

De cette manière, tout en ayant l'avantage de réduire le temps d'usinage, on peut aussi simplifier les équipements de commande, chaque outil recevant des instructions de travail identique. Lorsque l'encombrement le permet, il devient ainsi possible d'usiner simultanément deux pièces à l'aide d'un seul centre d'usinage.

Une simplification non négligeable peut ainsi intervenir au niveau de l'équipement d'emmagasinage des outils, puisqu'un magasin unique, de dimension et de forme adéquates,

0032890

4

et un équipement de permutation d'outils unique peuvent servir à alimenter les différents porte-outils.

Deux porte-outils peuvent, lorsqu'ils sont disposés en alignement l'un par rapport à l'autre, permettre de monter un outil sur un porte-outil et un autre outil ou une lunette supporté par l'autre porte-outil.

Les deux outils sont ensuite solidarisés par emboîtement de l'un dans l'autre ou l'outil et la lunette peuvent être solidarisés également par emboîtement.

Cette solution est particulièrement avantageuse dans le cas de la réalisation d'un trou passant dans une pièce multi-cloisonnée, comme une boîte de vitesses, car elle permet de réaliser un travail dit "en barre" en obviant les problèmes liés aux broches en porte-à-faux. En effet, les outils de chaque porte-outil ou l'outil d'un porte-outil et la lunette correspondante de l'autre porte-outil, après avoir été solidarisés par emboîtement, forment une barre rigide supportée aux deux extrémités par les paliers des porte-outils correspondants.

L'invention sera décrite plus en détail en référence aux dessins annexés, destinés uniquement à illustrer l'invention et ne présentant aucun caractère limitatif. A la lecture de cette description, d'autres avantages et caractéristiques complémentaires de l'invention apparaîtront à l'homme de l'art.

Dans les dessins:

- la figure 1 représente une vue en plan d'un centre d'usinage conforme à l'invention;
- la figure 2 représente une vue de profil d'un centre d'usinage conforme à l'invention;
- la figure 3 représente une vue de profil d'un centre d'usinage conforme à l'invention illustrant le travail "en barre" par emboîtement des éléments portés par deux porte-outils;
- la figure 4 est une vue en détail d'une possibilité d'emboîtement des éléments de la figure 3, correspondant à l'emboîtement de deux outils entre eux;
- la figure 5 est une vue de détail d'une autre possibilité d'emboîtement en variante, des éléments de la figure 3 correspondant à l'emboîtement d'un outil sur une lunette;
- les figure 6 à 9 illustrent les possibilités de travail d'une ou de plusieurs pièces, à l'aide d'un dispositif de centre d'usinage conforme à l'invention.

Des repères identiques ont été utilisés dans les différentes figures pour des éléments identiques ou pour des éléments similaires exerçant les mêmes fonctions dans les différentes vues.

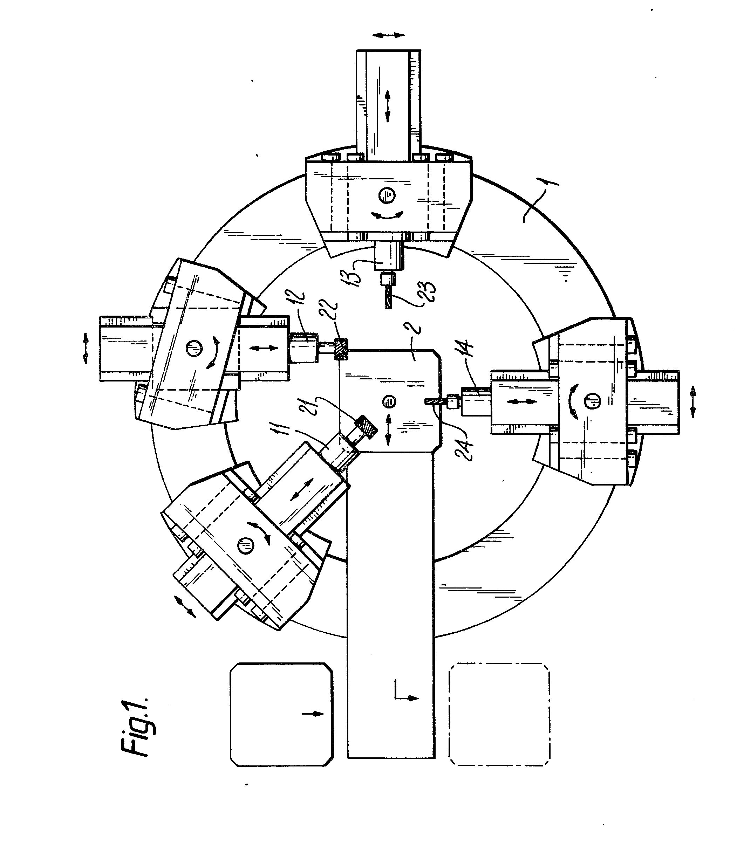

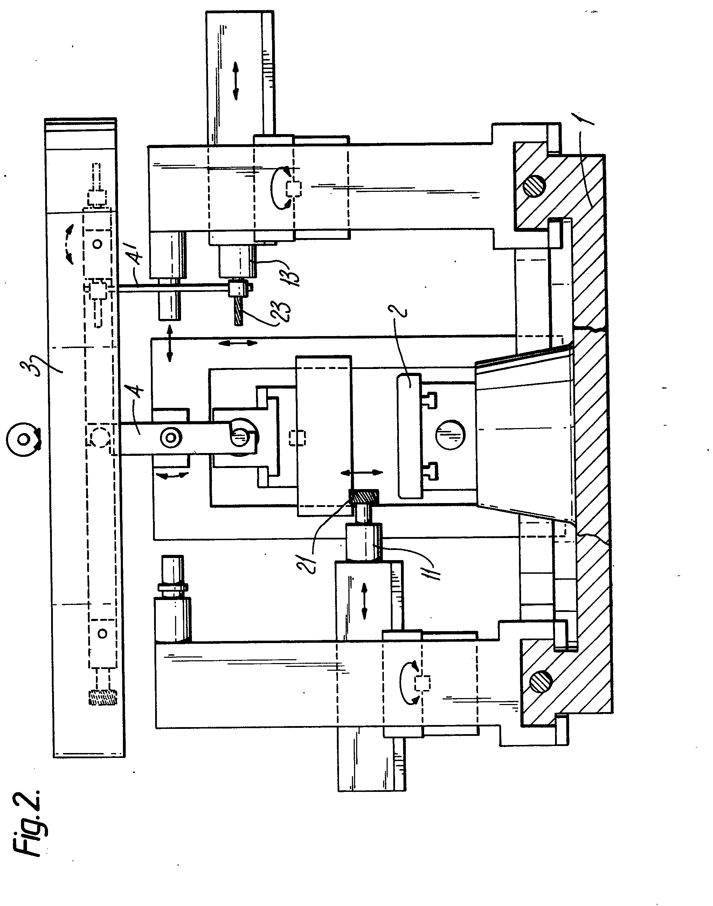

Dans les figures 1 et 2, un centre d'usinage monté sur un socle circulaire 1 porte en son centre une table mobile rotative 2, sur laquelle est alimentée la pièce à usiner ou le cas échéant,sont alimentées plusieurs pièces à usiner.

Contrairement aux forme d'exécution de l'état de la technique, la caractéristique de l'invention est le fait que le centre d'usinage comporte plusieurs porte-outils 11,12,13, 14 ... qui sont alimentés de préférence au départ d'un magasin unique 3, par un ou plusieurs échangeurs d'outils 4,4' et qui sont disposés selon des axes variables en fonction de l'opération à exécuter dans un même cycle d'usinage.

Les différents porte-outils peuvent être équipés d'outils identiques ou différents, par exemple les outils 21, 22, 23 et 24 représentés à la figure 1 et/ou à la figure 2.

De la manière habituelle, ces unités d'usinage sont déplaçables de la même manière que la broche unique des centres d'usinage de l'état de la technique dans la limite bien entendu de l'encombrement réciproque des différentes unités individuelles de porte-outil. Les mouvements prévus pour les différentes unités individuelles dans les trois plans sont représentés par les flèches.

Le mouvement de déplacement de la table 2, en plus du mouvement de pivotement sur son centre est également indiqué par des flèches.

Des flèches hachurées indiquent les mouvements des échangeurs d'outil.

La table peut en particulier effectuer un déplacement de dégagement latéral tel qu'indiqué tandis que les différentes unités individuelles d'usinage sont déplaçables sur le socle 1.

Dans cette forme d'exécution la plus générale de l'invention, la disposition relative des porte-outils individuels

6

est libre mais leur disposition est coordonnée et peut être commandée par un microprocesseur en fonction des usinages à réaliser.

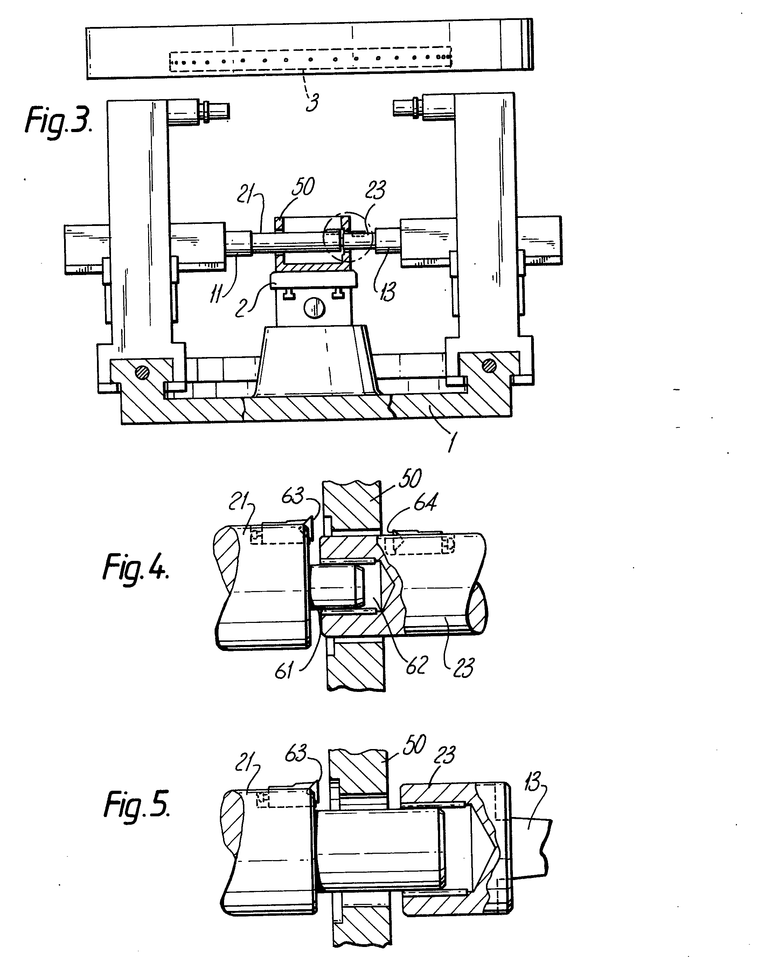

Le principe sur lequel est basée l'invention exerce ses effets favorables les plus marqués dans le cas de la forme d'exécution particulière représentée aux figures 3,4 et 5.

Dans ce cas, les porte-outils de deux unités d'usinage (respectivement 11, 21 et 13,23) d'un centre d'usinage sont alignés l'un par rapport à l'autre en une diposition convenable pour l'opération à effectuer sur la pièce 50.

Dans la figure 4, on a représenté la façon dont un outil 21 par un tenon 61 prend appui dans un logement 62 ménagé dans l'outil opposé 23. Chacun des outils porte des éléments de taille 63,64 adaptés au travail à effectuer sur la pièce 50.

Dans la variante représentée à la figure 5, l'outil 21 coopère avec une lunette 23 servant d'appui à l'outil 21.

Les deux variantes d'exécution représentées aux figures 4 et 5 permettent d'exécuter avec précision des usinages tels que ceux représentés à la figure 3, en évitant les inconvénients du porte-à-faux que l'on aurait à subir si l'outil 21 n'était pas soutenu lors de l'usinage, soit de la manière représentée à la figure 4, soit de la manière représentée à la figure 5.

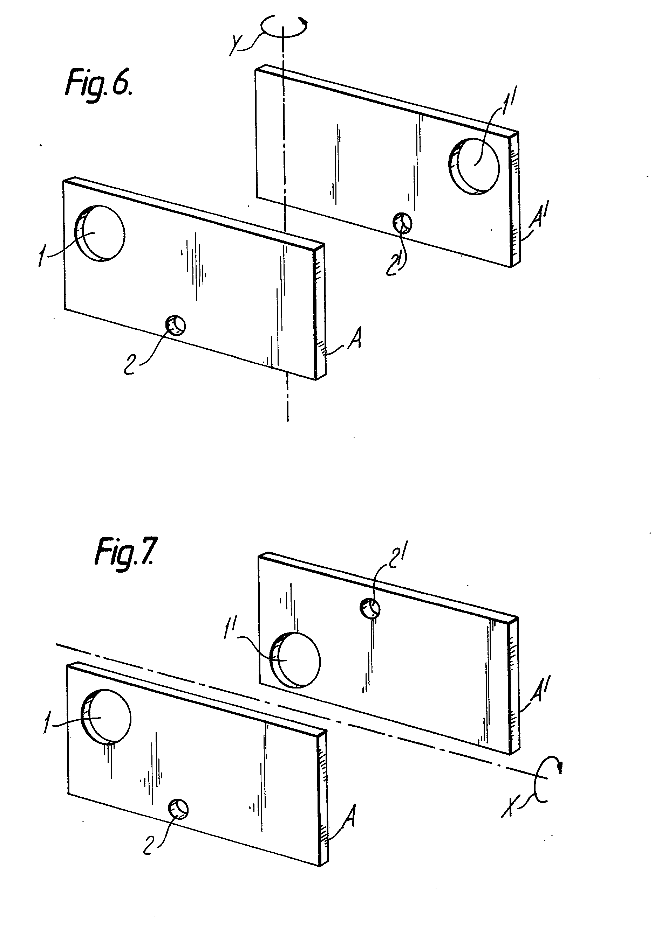

Les figures 6 et 7 illustrent la façon dont deux pièces A et A' qui sont par exemple des couvercles peuvent être usinés simultanément en réalisant le forage de grand diamètre 1 et 1' et le forage de petit diamètre 2 et 2', par une symétrie de rotation autour de l'axe y (figure 6) et de l'axe x (figure 7).

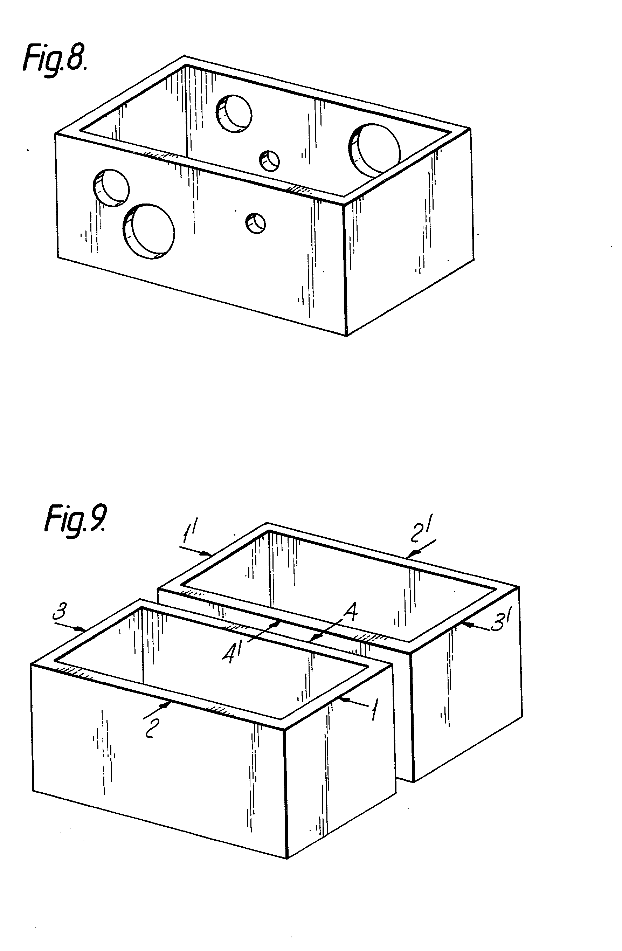

La figure 8 illustre la façon dont des forages peuvent être pratiqués sur une boîte, aussi bien des forages passants de diamètre constant que des forages alignés de diamètre différent.

Dans le cas de la figure 9, les opérations successives réalisables sur deux boîtes sont schématisées par les chiffres 1 à 4 et 1' à 4' selon les principes de l'invention.

Bien qu'on ait décrit des modes d'exécution particulièrement préférés de l'invention, il doit être bien entendu que de

7

nombreuses variantes et modifications peuvent être apportées tout en restant dans le cadre de l'invention.

8

REVENDICATIONS

1. Centre d'usinage comportant une table (2) supportant la ou les pièces à usiner qui restent fixes lors de l'usinage, un magasin d'outil (3) et un dispositif de permutation d'outil (4,4') caractérisé par le fait qu'il est équipé d'au moins deux porte-outils rotatifs (11,12,13,14) fonctionnant simultanément , disposés selon des axes variables en fonction de l'opération à exécuter, dans un même cycle d'usinage.

2. Centre d'usinage selon la revendication 1 caractérisé en ce que lesdits porte-outils (11,12,13,14) reçoivent des outils (23,24) identiques ou différents.

3. Centre d'usinage selon la revendication 1 caractérisé en ce qu'un premier porte-outil (11) reçoit un outil (21) et qu'un second porte-outil (13) est muni d'une lunette de réception (23) correspondante (Figure 3).

4. Centre d'usinage selon la revendication 1 ou 2 caractérisé en ce que les outils sont conçus pour travailler en effectuant la même opération, et ceci symétriquement par rapport à un axe de référence, qui ne passe pas par la pièce à usiner.

5. Centre d'usinage selon l'une quelconque des revendications 1 à 4 caractérisé en ce qu'un magasin unique (3) et un équipement de permutation d'outils unique (4) servent à alimenter les différents porte-outils (11,12,13,14).

6. Centre d'usinage selon la revendication 1 ou 2 caractérisé en ce que deux porte-outils sont disposés en alignement l'un par rapport à l'autre et qu'un outil (21,23) est monté sur chaque porte-outil, ces outils étant de plus solidarisés par emboîtement de l'un dans l'autre (Figure 4).

7. Centre d'usinage selon la revendication 1 ou 2 caractérisé en ce que deux porte-outils sont disposés en alignement l'un par rapport à l'autre et qu'un outil est monté sur un porte-outil et une lunette sur l'autre porte-outil, l'outil et la lunette étant de plus solidarisés par emboîtement de l'outil dans la lunette.

Fig.1.

Fig.2.

2/5

0032890

3/5

Fig.3.

Fig.4.

Fig.5.

Fig. 6.

Fig. 7.

Fig.8.

Fig.9.

0032890

Office européen des brevets

**RAPPORT DE RECHERCHE EUROPEENNE**

Numéro de la demande

EP 81 87 0004

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernée | B 23 Q 3/157<br>B 23 Q 3/10<br>B 23 B 29/02 |
| D | FR - A - 2 090 375 (AUGSBOURG)<br>* Revendication 1 *<br>--- | 1 | |
| | FR - A - 2 259 680 (JAHIN)<br>* Revendication 8 *<br>--- | 1 | |
| | DE - C - 883 863 (BLANK)<br>* Revendication 1 *<br>--- | 1 | |
| | US - A - 3 077 128 (BROWN)<br>* Colonne 8, lignes 16-49 *<br>--- | 1 | **DOMAINES TECHNIQUES RECHERCHES (Int. Cl. 3)**<br><br>B 23 Q 1/00<br> 3/00<br> 35/00<br> 39/00<br>B 23 B 29/00<br>B 27 C 5/00 |
| -D | FR - A - 2 374 120 (KEARNEY)<br>* Page 3, lignes 21-25; page 13, lignes 3-5 *<br>--- | 1,2,4 | |
| D | FR - A - 2 394 364 (VARRY)<br>* Revendication 1 *<br>--- | 1,4 | |
| D | US - A - 3 238 615 (LEONE)<br>* Colonne 3, lignes 64-75; colonne 4, lignes 34-40 *<br>--- | 1 | **CATEGORIE DES DOCUMENTS CITES** |
| D | DE - A - 2 000 998 (HÜLLER)<br>* Revendication 2 *<br>--- | 5 | X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons |
| A | CH - A - 461 219 (POSALUX) | | |
| A | DE - A - 1 477 167 (BAUBLYS)<br>./.. | | &: membre de la même famille, document correspondant |

Le présent rapport de recherche a été établi pour toutes les revendications

| Lieu de la recherche | Date d'achèvement de la recherche | Examinateur |
|---|---|---|
| La Haye | 05.05.1981 | DE GUSSEM |

OEB Form 1503.1 06.78

0032890

**Office européen des brevets**   **RAPPORT DE RECHERCHE EUROPEENNE**   EP 81 87 0004

– 2 –

| | DOCUMENTS CONSIDERES COMME PERTINENTS | | CLASSEMENT DE LA DEMANDE (Int. Cl. ³) |
|---|---|---|---|
| Catégorie | Citation du document avec indication, en cas de besoin, des parties pertinentes | Revendication concernée | |
| A | GB - A - 998 471 (T.I.) | | |
| A | US - A - 2 051 720 (KINGSBURY) | | |

DOMAINES TECHNIQUES RECHERCHES (Int. Cl. ³)